Europäisches Patentamt

European Patent Office

Office européen des brevets

(11) Veröffentlichungsnummer: **0 025 533**
**A1**

(12) **EUROPÄISCHE PATENTANMELDUNG**

(21) Anmeldenummer: 80105135.0

(22) Anmeldetag: 28.08.80

(51) Int. Cl.³: **G 11 B 21/02**
// G11B5/54

(30) Priorität: 13.09.79 DE 2937138

(43) Veröffentlichungstag der Anmeldung: 25.03.81
Patentblatt 81/12

(84) Benannte Vertragsstaaten: AT BE CH FR GB IT LI LU NL
SE

(71) Anmelder: SIEMENS AKTIENGESELLSCHAFT Berlin
und München, Postfach 22 02 61,
D-8000 München 22 (DE)

(72) Erfinder: Biermeier, Johann, Ing.grad., Joergstrasse 82,
D-8000 München 21 (DE)
Erfinder: von Fabris, Wilhelm, Ing.grad.,
Klem-Pauli-Weg 45, D-8014 Neubiberg (DE)

(54) **Anordnung für beidseitige Hubbegrenzung eines hin- und herbewegten Körpers.**

(57) Eine an dem hin und her bewegten Körper (5) angeordnete Stange (2) mit Kolben (1) ragt in ein Aufnahmeteil (10) des Magnetsystems, gegen das auf beiden Seiten
eine bewegliche Ringscheibe (4, 7) gedrückt wird. Der
Kolben kann auf dem freien Ende der Stange verstellt und
festgelegt werden.

EP 0 025 533 A1

SIEMENS AKTIENGESELLSCHAFT
BERLIN UND MÜNCHEN

Unser Zeichen
VPA 79 P 2 0 5 9 EUR

Anordnung für beidseitige Hubbegrenzung eines hin- und herbewegten Körpers.

Die Erfindung bezieht sich auf eine Anordnung für beidseitige Hubbegrenzung eines hin- und herbewegten Körpers, insbesondere des Positionierwagens eines Plattenspeichers.

Bei hin- und herbewegten Körpern tritt häufig die Aufgabe auf, den Hub entweder auf der einen Seite oder auf der anderen Seite oder beidseitig zu begrenzen. Ein typisches Beispiel für eine beidseitige Hubbegrenzung ist der sogenannte Positionierwagen oder auch Kopfwagen eines Plattenspeichers. Ein solcher Positionierwagen besteht z.B. aus einem Wagen-Grundkörper mit einer Reihe von Rollen zum Fahren des Wagens auf Schienen, einer Einrichtung zur Aufnahme der auf den Plattenoberflächen des Plattenstapels zu positionierenden Magnetköpfe und der Tauchspule eines Linearmotors. Bei solchen Einrichtungen besteht die Aufgabe, den Positionierwagen bei einer Fehl-

Kar 1 Stl / 11.9.1979

0025533
79 P 2 0 5 9 EUR

positionierung z.B. infolge von Stromausfall oder Ausfall eines Teiles der Ansteuerschaltung innerhalb vorgegebener Bremswege von der maximalen Geschwindigkeit auf Stillstand zu verzögern.

Anordnungen, die dieses allgemeine Problem lösen, sind an sich bekannt. So ist z.B. aus der Literaturstelle IBM Technical Disclosure Bulletin Juni 1974 eine beidseitige Hubbegrenzungsanordnung zur Verwendung in Verbindung mit einem Linearmotor bekannt geworden. Diese Anordnung besteht im wesentlichen aus einem zylinderförmigen Kern, auf dem beweglich ein Stopring und eine Stophülse angeordnet sind. Zwischen Hülse und Ring befindet sich auf dem Kern eine Feder, die einerseits gegen den Ring und andererseits gegen eine Innenschulter der Hülse drückt. Der in seiner Hin- und Herbewegung zu begrenzende Körper besitzt einen Hohlkörper, in welchen die Hubbegrenzungseinrichtung aus Kern mit Feder, Hülse und Ring hineinragen. Als Hubbegrenzungsflächen und Anschlag dienen einerseits der Boden dieses Hohlkörpers und zum anderen ein am anderen Ende des Hohlkörpers angeordneter fester Ring. Vom Aufwand her gesehen ist diese bekannte Anordnung an sich nicht ungünstig. Sie hat jedoch den Nachteil, daß sie keine Möglichkeit für eine Einstellung der Hublage und der Länge des Arbeitshubes des in seiner Hin- und Herbewegung zu begrenzenden Körpers aufweist.

Eine wesentliche Forderung für eine rationell zu fertigende und leicht zu montierende Hubbegrenzungsanordnung ist aber, daß die Hublage einerseits und die Länge des Hubes andererseits in einem gewissen Umfang einstellbar ist. Dies erleichtert die Herstellung der einzelnen Teile der Anordnung und die Montage derselben, weil die Toleranzforderungen nicht so hoch angesetzt werden müssen.

Ferner ist aus der DE-OS 27 38 395 eine Anordnung
für beidseitige Hubbegrenzung eines hin- und herbewegten Körpers bekannt, bei der sowohl die Hublage
als auch die Länge des Hubes einstellbar ist. Dies
wird dort erreicht durch eine an dem hin- und herbewegten Körper befestigte Stange mit einem am freien
Ende angeordneten Kolben, durch eine ortsfest angeordnete Scheibe mit einer zentralen Öffnung, durch
die die Stange mit Kolben ragt, durch eine auf der
einen Seite der Scheibe verschiebbar angeordnete Hülse,
die mit Hilfe einer Feder und eines ortsfest angeordneten Gegenlagers gegen die Scheibe gedrückt wird,
durch eine auf der anderen Seite der Scheibe verschiebbar angeordnete zweite Scheibe, die mit Hilfe einer
zweiten Feder und eines ortsfest angeordneten Federkäfigs gegen die erste Scheibe gedrückt wird, und durch
eine solche Ausgestaltung des Kolbens, daß sich dieser
am Ende der Bewegung in der einen Richtung an einen
Innenflansch der Hülse und am Ende der Bewegung in
der anderen Richtung an die zweite Scheibe anlegen kann.

Diese Anordnung hat außer der Tatsache der Einstellbarkeit der Hublage und der Länge des Hubes noch eine
Reihe weiterer Vorteile: Der Angriff der Bremskraft erfolgt im Schwerpunkt des Positionierwagens, die erfindungsgemäße Einrichtung besteht aus einfachen und
damit billigen Einzelteilen und sie weist relativ kleine Einbaumaße in radialer Richtung auf, was im Hinblick
auf eine möglichst geringe Beeinträchtigung des Flußverlaufes im Magnetsystem für Positioniersysteme von
Plattenspeichern besonders wichtig ist. Außerdem ist
die zusätzlich zu bewegende Masse von Kolben und Stange
gering.

Trotz all dieser Vorteile hat die bekannte Anordnung aber noch den Nachteil, daß mehrere unterschiedlich ausgebildete Teile, wie z.B. die Hülse und die verschieden großen Scheiben vorhanden sind, die die Kosten bei der Herstellung beeinflussen, und daß außerdem die Verzögerungswerte in den beiden Bewegungsrichtungen infolge verschieden großer Massen unterschiedlich groß sind.

Der Erfindung lag daher die Aufgabe zugrunde, unter Beibehaltung des Grundprinzips der bekannten Anordnung diese so weiterzubilden, daß weniger und gleiche Teile benötigt werden, die zudem noch kleinstmögliche Masse besitzen und deshalb in beiden Bewegungsrichtungen kleine und gleiche Verzögerungswerte bringen.

Erfindungsgemäß wird dies erreicht durch ein Aufnahmeteil mit einer zentralen Öffnung, durch die die Stange mit Kolben ragt, durch eine auf der einen Seite des Aufnahmeteils verschiebbar angeordnete Scheibe, die mit Hilfe einer Feder und eines ortsfest angeordneten Gegenlagers gegen das Aufnahmeteil gedrückt wird, durch eine auf der anderen Seite des Aufnahmeteils verschiebbar angeordnete zweite Scheibe, die mit Hilfe einer zweiten Feder und eines ortsfest angeordneten Federkäfigs gegen das Aufnahmeteil gedrückt wird, und durch eine solche Ausgestaltung des Kolbens, daß sich dieser am Ende der Bewegung in der einen Richtung an die eine Scheibe und am Ende der Bewegung in der anderen Richtung an die zweite Scheibe anlegen kann.

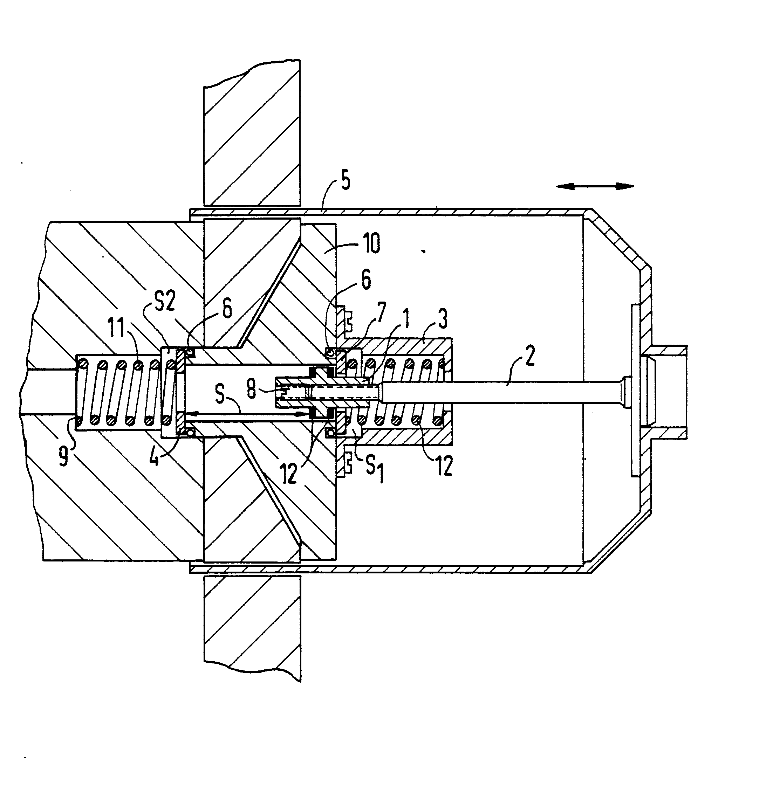

Weitere Einzelheiten der Erfindung ergeben sich aus den Ansprüchen sowie der nachfolgenden Beschreibung eines in der Zeichnung dargestellten Ausführungsbeispieles.

Die Zeichnung zeigt ein Ausführungs- und Anwendungsbeispiel für die Anordnung gemäß der Erfindung an einem Positionierwagen für einen Plattenspeicher. Die dargestellte Anordnung besteht aus einem Magnetsystem und der in bekannter Weise mit dem Magnetsystem zusammenarbeitenden Tauchspule 5. Die Tauchspule 5 wird je nach Erregung eine bestimmte Strecke hin- und herbewegt, wie rechts oben durch einen Doppelpfeil angedeutet ist. Aufgabe der erfindungsgemäßen Anordnung ist es, im Falle einer Fehlpositionierung, z.B. durch Ausfall der mit der Tauchspule 5 zusammenarbeitenden Ansteuerschaltung, die Tauchspule, die mit ihr verbundenen Magnetköpfe und den sogenannten Kopfwagen, die hier der Übersicht halber weggelassen wurden, innerhalb gewisser Bremswege S1 bzw. S2 von der maximalen Geschwindigkeit auf Stillstand zu verzögern. Dazu ist in der Achse der Tauchspule 5 eine Stange 2 angeordnet, an deren freiem Ende sich ein Kolben 1 befindet. Das freie Ende der Stange 2 ist vorteilhafterweise mit einem Außengewinde versehen und der Kolben 1 besitzt eine durchgehende Bohrung mit Innengewinde. Dadurch kann der Kolben 1 auf dem Gewindeteil der Stange 2 verstellt werden. Nach Einstellung der richtigen Lage kann er außerdem mit Hilfe eines Gewindestiftes 8 an jeder beliebigen Stelle des Gewindeteils der Stange 2 festgelegt werden.

Das Aufnahmeteil 10 besitzt eine zentrale Öffnung, durch die die Stange 2 mit dem Kolben 1 ragt. Auf der einen Seite des Aufnahmeteils befindet sich, verschiebbar angeordnet, eine Scheibe 4, die mit Hilfe einer Feder 11 und eines Gegenlagers 9 gegen das Aufnahmeteil 10 gedrückt wird. Das Aufnahmeteil 10 ist so ausgestaltet, daß sich der Kolben 1 in seinem Inneren frei bewegen kann. Auf der anderen Seite des Aufnahmeteil 10 befindet sich eine verschiebbar an-

79 P 2 0 5 9 EUR

0025533

geordnete zweite ringförmige Scheibe 7, die mit Hilfe einer zweiten Feder 12 und eines mit dem Aufnahmeteil 10 fest verbundenen, d.h. ebenfalls ortsfest angeordneten Federkäfigs 3 gegen das Aufnahmeteil 10 gedrückt wird. Der Kolben 1 ist so ausgestaltet, daß er sich am Ende der Bewegung in der einen Richtung, d.h. z.B. nach links, an die Scheibe 4 und am Ende der Bewegung in der anderen Richtung, d.h. also nach rechts, an die Scheibe 7 anlegen kann.

Durch diese Anordnung ist die Tauchspule 5 und damit der mit ihr verbundene Positionierwagen in seinem freien Arbeitshub durch die Bewegung des Kolbens 1 in dem Aufnahmeteil 10 begrenzt. Fährt der Kolben 1 z.B. nach rechts, dann trifft er am Ende des Arbeitshubes S auf die Scheibe 7. Dadurch wird die Scheibe 7 gegen die Kraft der Feder 12 nach rechts bewegt und drückt die Feder 12 zusammen. Dabei wird die kinetische Energie des Positionierwagens aufgebraucht und der Wagen kommt innerhalb Bremshub S1 zum Stillstand. Anschliessend wird der Kolben 1 wieder von der Feder 12 in den Bereich des Freihubes S zurückgedrückt. In entsprechender Weise drückt der Kolben 1 die Scheibe 4 nach links, wenn er nicht innerhalb des Arbeitshubes S zum Stillstand kommt, sondern auf die Scheibe 4 trifft. Dann bewegt er die Scheibe 4 gegen die Kraft der Feder 11 nach links, drückt diese zusammen und kommt dadurch zum Stillstand. Auch in diesem Fall wird der Kolben 1 anschließend wieder von der Feder 11 in dem Bereich des Arbeitshubes S zurückgedrückt.

Ein wesentliches Merkmal der Erfindung ist es, daß der Kolben 1 auf dem Gewindeteil der Stange 2 mit Hilfe eines Werkzeuges eingestellt werden kann, welche durch das Gegenlager 9, die Feder 11 und die Scheibe 4

0025533

in das Innere des Aufnahmeteils eingeführt werden kann. Die Einstellung der Hublage der Tauchspule 5 und damit des gesamten Positionierwagens mit seinem Magnetköpfen erfolgt einfach durch Verdrehen des Kolbens 1 auf dem Gewindeteil der Stange 2 und durch Festsetzen des Kolbens 1 an beliebiger Stelle mit Hilfe des Gewindestiftes 8.

Zur Dämpfung des Kolbenaufschlags auf die Scheiben 4 bzw. 7 ist der Kolben 1 an seinen Aufschlagflächen mit dämpfendem Material (12) vorzugsweise Viton, versehen. Zur Dämpfung des Aufschlags der Scheiben 4 bzw. 7 auf das Aufnahmeteil 10 dienen O-Ringe 6 aus dämpfendem Material in demjenigen Bereich des Aufnahmeteils 10, in dem die Scheiben 4 bzw. 7 an dem Aufnahmeteil 10 anliegen.

Die Anordnung gemäß der Erfindung wurde anhand eines Positioniersystems für einen Plattenspeicher erläutert. Es ist aber selbstverständlich, daß eine solche Anordnung für beidseitige Hubbegrenzung nicht nur für Plattenspeicher-Positionierer sondern allgemein zur beidseitigen Hubbegrenzung hin- und herbewegter Körper verwendet werden kann.

4 Patentansprüche

<u>Patentansprüche</u>

1. Anordnung für beidseitige Hubbegrenzung eines hin- und herbewegten Körpers, insbesondere des Positionierwagens eines Plattenspeichers, mit einer an dem hin- und herbewegten Körper befestigten Stange mit einem am freien Ende derselben angeordneten Kolben, g e - k e n n z e i c h n e t  durch ein Aufnahmeteil (10) mit einer zentralen Öffnung, durch die die Stange (2) mit Kolben (1) ragt, durch eine auf der einen Seite des Aufnahmeteils (10) verschiebbar angeordnete Scheibe (4), die mit Hilfe einer Feder (11) und eines ortsfest angeordneten Gegenlagers (9) gegen das Aufnahmeteil (10) gedrückt wird, durch eine auf der anderen Seite des Aufnahmeteils (10) verschiebbar angeordnete zweite Scheibe (7), die mit Hilfe einer zweiten Feder (12) und eines ortsfest angeordneten Federkäfigs (3) gegen das Aufnahmeteil (10) gedrückt wird, und durch eine solche Ausgestaltung des Kolbens, daß sich dieser am Ende der Bewegung in der einen Richtung an die eine Scheibe (4)  und am Ende der Bewegung in der anderen Richtung an die zweite Scheibe (7) anlegen kann.

2. Anordnung nach Anspruch 1, d a d u r c h  g e - k e n n z e i c h n e t , daß die Stange (2) an ihrem freien Ende ein Außengewinde und der Kolben (1) eine durchgehende Bohrung mit Innengewinde besitzt und mit Hilfe eines Gewindestiftes (8) an beliebiger Stelle des Gewindeteils der Stange festgelegt werden kann.

3. Anordnung nach Anspruch 1 oder 2, d a d u r c h  g e k e n n z e i c h n e t , daß der Kolben (1) an seinen Aufschlagflächen mit dämpfendem Material (12) vorzugsweise Viton, versehen ist.

4. Anordnung nach einem der Ansprüche 1 bis 3, d a - d u r c h g e k e n n z e i c h n e t , daß in demjenigen Bereich des Aufnahmeteils, wo die Scheiben (4, 7) anliegen, O-Ringe (6) aus dämpfendem Material, vorzugsweise Viton, vorgesehen sind.

**Europäisches Patentamt**

**EUROPÄISCHER RECHERCHENBERICHT**

0025533

Nummer der Anmeldung
EP 80 10 5135

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | IBM JOURNAL OF RESEARCH AND DEVELOPMENT, Band 18, Nr. 6, November 1974, Seiten 489-505 New York, U.S.A. R.B. MULVANY: "Engineering Design of a Disk Storage Facility with Data Modules" <br><br> * Seite 501, linke Spalte, Zeile 10 – rechte Spalte, Zeile 25; Figuren 12,14 * <br><br> -- | 1-3 |
| | IBM TECHNICAL DISCLOSURE BULLETIN, Band 17, Nr. 1, Juni 1974, Seiten 219-220 Armonk, U.S.A. E.H. EMPSON et al.: "Single spring bidirectional crash stop for use at central axis of linear voice coil motor" <br><br> -- | 1,3 |
| D | DE - A - 2 738 395 (KOLLER) <br> * Seite 4, Zeile 24 – Seite 6, Spalte 29; Figuren * <br><br> -- | 1,2 |
| | US - A - 4 110 802 (HO et al.) <br> * Spalte 3, Zeile 31 – Spalte 4, Zeile 42 * <br><br> -- | 1,2 |
| | AU - A - 31410/71 (KOIKE) <br> * Seite 6, Zeilen 18-23; Seite 13, Zeile 15 – Seite 14, Zeile 19; Seite 16, Zeile 3 – Seite 18, Zeile 16; Figuren 6,8 * <br><br> -- ./. | 1,2 |

**KLASSIFIKATION DER ANMELDUNG (Int.Cl. 3)**

G 11 B 21/02//
G 11 B 5/54

**RECHERCHIERTE SACHGEBIETE (Int. Cl. 3)**

G 11 B 5
F 16 F 15
H 02 K 41
G 11 B 21

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

☒ Der vorliegende Recherchenbericht wurde für alle Patentansprüche erstellt.

| Recherchenort | Abschlußdatum der Recherche | Prüfer |
|---|---|---|
| Den Haag | 27-11-1980 | FUX |

EPA form 1503.1 06.78

Europäisches
Patentamt

**EUROPÄISCHER RECHERCHENBERICHT**

0025533

Nummer der Anmeldung

EP 80 10 5135

-2-

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | US - A - 2 929 591 (ETCHELLS et al.)<br><br>* Spalte 1, Zeile 57 - Spalte 2, Zeile 45; Figuren * <br><br>---- | 1,2 | |
| | | | **RECHERCHIERTE SACHGEBIETE (Int. Cl.³)** |

EPA Form 1503.2  06.78